# EUROPÄISCHE PATENTSCHRIFT

(11) **EP 1 070 002 B1**
(45) Veröffentlichungstag und Bekanntmachung des Hinweises auf die Patenterteilung: **28.11.2001**
(21) Anmeldenummer: 99924668.9
(22) Anmeldetag: 22.03.1999
(51) Int. Cl.: B60K 41/26, B60T 11/10

(54) **INCHBREMSEINRICHTUNG**
INCHING BRAKING DEVICE
SYSTEME DE FREINAGE GRADUEL

(30) Priorität: 08.04.1998 DE 19815889
(43) Veröffentlichungstag der Anmeldung: 24.01.2001
(73) Patentinhaber: Mannesmann Rexroth AG, 97816 Lohr am Main (DE)
(72) Erfinder: MIES, Hubertus, D-97816 Lohr (DE)
(74) Vertreter: Winter, Brandl, Fürniss, Hübner, Röss, Kaiser, Polte, Partnerschaft
(86) Internationale Anmeldenummer: DE9900836
(87) Internationale Veröffentlichungsnummer: WO9952734

(56) Entgegenhaltungen:
- EP-A- 0 223 686
- WO-A-97/02964
- DE-A- 19 513 805
- DE-U- 8 437 986
- US-A- 3 923 129

## Beschreibung

Die Erfindung betrifft eine Inchbremseinrichtung mit einer Inch- und einer Bremsventilanordnung gemäß dem Oberbegriff des Patentanspruchs 1.

Derartige Inchbremseinrichtungen werden bei hydraulisch betriebenen Arbeitsgeräten, beispielsweise bei Radladern, Hubstaplern etc. eingesetzt, bei denen zum Abbremsen neben der eigentlichen Bremsanlage auch das hydraulische Antriebssystem genutzt wird. Das Bremsen mit dem Antriebssystem wird als "Inchen" bezeichnet. Die Aufteilung der Bremskraft auf die eigentliche Bremsanlage und das Antriebssystem hat den Vorteil, daß der Bremsenverschleiß des Arbeitsgerätes gegenüber Lösungen ohne Inchbremseinrichtung erheblich verringert werden kann, da bei geringen Geschwindigkeitsänderungen vorwiegend das Antriebssystem zum Abbremsen genutzt werden kann.

Bei derartigen, herkömmlichen Systemen erfolgt die Betätigung beispielsweise durch ein Bremspedal, über das in Abhängigkeit vom Betätigungswinkel des Pedals das Bremssystems des Arbeitsgerätes mit einem Bremsdruck beaufschlagt wird. Dieser Bremsdruck wirkt als Steuerdruck für ein Inchventil, über das das Antriebssystem des Arbeitsgerätes zum Inchen ansteuerbar ist. Das Bremssystem ist über eine Rückstellfeder oder ein Vorspannventil derart vorgespannt, daß die Bremse erst nach Überschreiten eines Mindestbremsdrucks von beispielsweise 9 Bar greift. Bei derartigen herkömmlichen Lösungen steigt die Kennlinie für den Bremsdruck im Inchbereich relativ flach an, um dann bei Abfall des Inchdruckes auf Null eine größere Steigung zu erhalten, so daß sich der eigentliche Bremsvorgang an den Inchvorgang anschließt. Der Inchdruck erreicht demnach dann seinen Minimalwert, wenn der Bremsdruck in den Bereich gelangt, in dem der Bremsvorgang über die Bremseinheit eingeleitet wird.

Beim Einsatz derartiger herkömmlicher Inchbremssysteme zeigt es sich, daß es insbesondere im Übergangsbereich vom Inchvorgang zur Einleitungsphase des eigentlichen Bremsvorganges zu Unstetigkeiten kommen kann, so daß der Inchvorgang bereits vom einsetzenden Bremsvorgang überlagert ist. Da diese Unstetigkeiten bei den herkömmlichen Systemen nicht beherrschbar sind, hat man in der DE 195 25 582 A1 der Anmelderin vorgeschlagen, die Bremsventilanordnung und die Inchventilanordnung einer Inchbremseinrichtung über eine gemeinsame Übertragungseinrichtung zu koppeln, so daß die Ventilschieber beider Ventilanordnungen bei Betätigung des Bremspedales angesteuert werden. Durch diese Maßnahme ist gewährleistet, daß der Bremsdruck für das Bremssystem erst dann ansteigt, wenn der Inchdruck auf Null abgefallen ist. Auf diese Weise ist den Unstetigkeiten im Übergangsbereich vom Inchen zum Bremsen vorgebeugt.

Bei einigen Anwendungsfällen kann es jedoch vorteilhaft sein, wenn der Bremsdruck bereits während des Inchvorganges einen vorbestimmten Grenzwert annimmt. Diese gezielte Druckführung der Inchbremseinrichtung mit sich überschneidenden Inch- und Bremskennlinien ist in definierter Weise nicht durch die vorbeschriebenen Konstruktionen möglich.

Demgegenüber liegt der Erfindung die Aufgabe zugrunde, eine Inchbremseinrichtung zu schaffen, bei der der Bremsdruck im wesentlichen unabhängig vom Inchdruck aufbaubar ist.

Diese Aufgabe wird durch eine Inchbremseinrichtung mit den Merkmalen des Patentanspruchs 1 gelöst.

Durch die Maßnahme, den Ventilschieber einer Inchventilanordnung über einen Mitnehmer mit der Betätigungseinrichtung, vorzugsweise dem Bremspedal direkt zu koppeln und den Bremskolben eine Stelleinrichtung zuzuordnen, die erst nach einem vorbestimmten Weg des Mitnehmers eine Stellbewegung des Bremskolbens bewirkt, kann der Bremskolben in seine Regelposition gebracht werden, wenn das maximale Inchen, d.h. die maximale Bremswirkung durch das Antriebssystem, noch nicht erreicht ist. Auf diese Weise ist eine exakte Abstimmung des Inch- und des Bremsvorganges möglich, wobei sich durch entsprechende Ausgestaltung des Mitnehmers und der Stelleinrichtung unterschiedliche Überschneidungsbereiche der Kennlinien der Inchventilanordnung und der Bremsventilanordnung einstellen lassen. Auf diese Weise läßt sich der gesamte Bremsvorgang (Inchen und Bremsen über die Bremseinrichtung) in optimaler Weise an die jeweiligen Betriebsbedingungen anpassen.

Der Aufbau der Inchbremseinrichtung ist besonders einfach, wenn der Mitnehmer für den Inchventilschieber als Stifteinrichtung ausgebildet ist, die einerseits an der Betätigungseinrichtung und andererseits am Inchkolben anliegt.

Der Platzbedarf der Inchbremseinrichtung läßt sich minimieren, wenn die beiden Kolben der Brems- und der Inchventilanordnung koaxial hintereinander liegend in einem Gehäuse aufgenommen sind und die Stifteinrichtung den Bremskolben gleitend durchsetzt, so daß dieser praktisch als Führung für die Stifteinrichtung dient.

Der Aufbau der Betätigungseinrichtung ist besonders einfach, wenn diese mit einer Betätigungsstange ausgeführt ist, die über eine an einem Inchfederteller angreifende Inchfeder in ihre Ruheposition vorgespannt ist, wobei die Stifteinrichtung ebenfalls am Inchfederteller anliegt.

Um einen Mittenversatz zwischen dem Bremskolben und einer Führungsbuchse für den Inchkolben auszugleichen, wird die Stifteinrichtung vorzugsweise durch zwei koaxial hintereinander liegende Stifte ausgebildet, von denen einer im Bremskolben und der andere in der Führungsbuchse geführt sind.

Bei einem bevorzugten Ausführungsbeispiel trägt der Bremskolben an einem Endabschnitt einen Federteller zum Abstützen einer Bremsfeder, deren vom Federteller entfernter Endabschnitt in Anlage an die Betätigungsstange bringbar ist.

Zur Bruchsicherung der Inchfeder kann die Betätigungsstange mit einem Anschlag versehen werden, der in Anlage an den Inchfederteller bringbar ist.

Vorteilhafterweise werden der Inchkolben und die Stifteinrichtung über eine Inchdruckfeder in ihre Grundposition vorgespannt, wobei sich der Bremskolben über eine Regelfeder am benachbarten Endabschnitt der Führungsbuchse für den Inchkolben abstützt.

Sonstige vorteilhafte Weiterbildungen der Erfindung sind Gegenstand der weiteren Unteransprüche.

Im folgenden wird ein bevorzugtes Ausführungsbeispiel der Erfindung anhand schematischer Zeichnungen näher erläutert. Es zeigen:
- **Fig. 1**: einen Schnitt durch eine erfindungsgemäße Inchbremseinrichtung;
- **Fig. 2**: eine Detailansicht der Inchbremseinrichtung aus Fig. 1 und
- **Fig. 3**: Kennlinien der Inchbremseinrichtung aus Fig. 1.

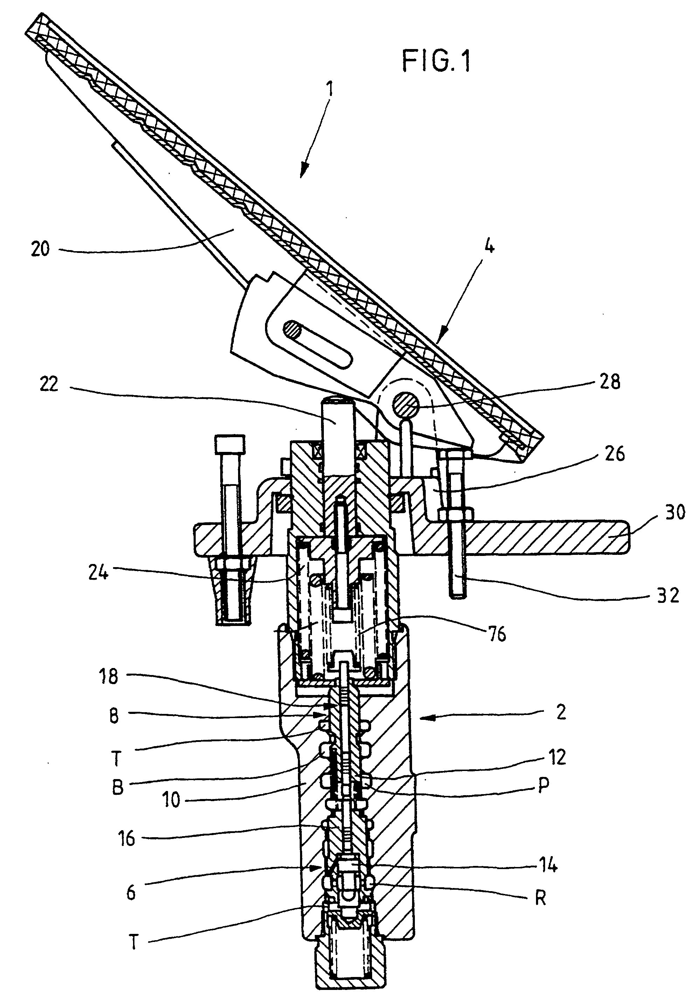

Fig. 1 zeigt einen Längsschnitt durch eine Inchbremseinrichtung 1, wie sie beispielsweise bei der Ansteuerung eines Radladers eingesetzt wird. Die gezeigte Inchbremseinrichtung 1 hat eine Inchbremsventilanordnung 2, die über eine Betätigungseinrichtung 4 betätigbar ist.

Die Inchbremsventilanordnung 2 besteht im wesentlichen aus einer Inchventilanordnung 6 und einer Bremsventilanordnung 8, die in einem gemeinsamen Ventilgehäuse 10 aufgenommen sind. Die Bremsventilanordnung 8 hat einen Bremskolben 12, der direkt im Ventilgehäuse 10 geführt ist. Ein Inchkolben 14 der Inchventilanordnung 6 ist in einer Führungsbuchse 16 geführt, die ihrerseits im Ventilgehäuse 10 aufgenommen ist. Durch Betätigung des Inchkolbens 14 läßt sich ein Tankanschluß T des Ventilgehäuses 10 mit einem Arbeitsanschluß R verbinden, an den ein nicht dargestellter hydrostatischer Antrieb angeschlossen ist. In seiner dargestellten Grundposition ist der Arbeitsanschluß R gegenüber dem Tankanschluß T abgesperrt, so daß der hydrostatische Antrieb mit dem maximalen Inchdruck p_{I} versorgt ist.

Über den Bremskolben 12 kann die Verbindung zwischen einem weiteren Tankanschluß T und einem Arbeitsanschluß B (Bremsanschluß) zugesteuert werden, an den die eigentliche Bremsanlage des Radladers angeschlossen ist. Neben dem Aufsteuern des Arbeitsanschlusses B wird bei der Betätigung des Bremskolbens 12 die Verbindung zwischen einem Druckanschluß, bspw. einem Pumpen- oder Speicheranschluß P und dem Arbeitsanschluß B aufgesteuert, so daß dieser mit Hydraulikfluid versorgt wird und der Bremsdruck PB zur Ansteuerung der eigentlichen Bremsanlage aufgebaut wird.

Die Betätigung des Inchkolbens 14 erfolgt mittels einer Stifteinrichtung 18, die den Bremskolben 12 und die Führungsbuchse 16 durchsetzt und an der benachbarten Stirnseite des Inchkolbens 14 anliegt. Die Betätigung des Inchkolbens 14 und des Bremskolbens 12 erfolgt über die Betätigungseinrichtung 4, die bei dem gezeigten Ausführungsbeispiel ein Bremspedal 20 hat, das auf eine federvorgespannte Betätigungsstange 22 wirkt. Diese ist durch eine Rückstellfeder 24 und eine Inchfeder 76 in ihre Grundstellung vorgespannt. Letztere ist an der Stifteinrichtung 18 abgestützt.

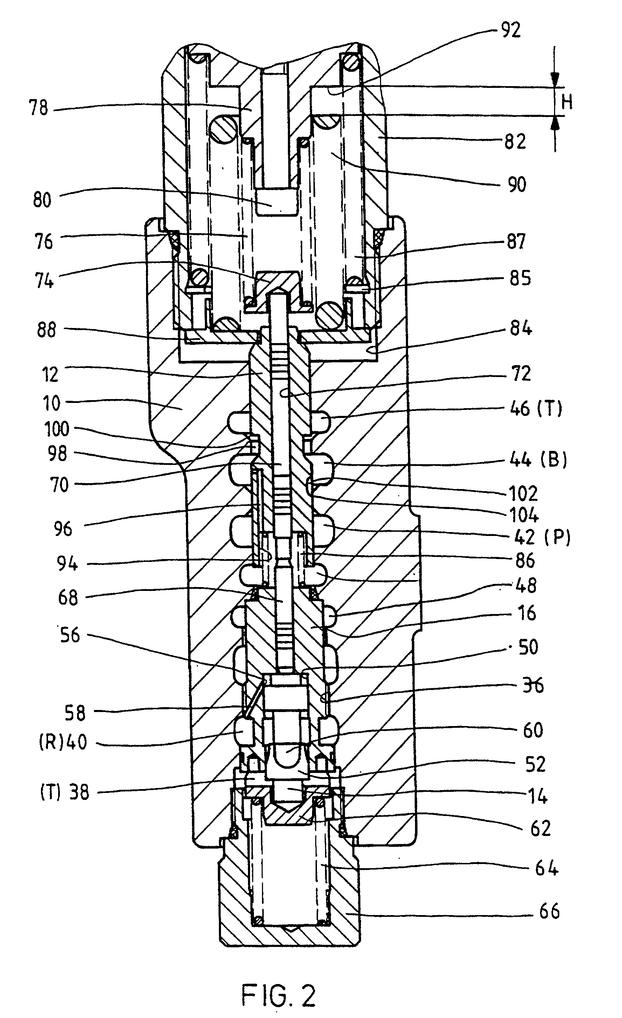

Das Bremspedal 20 ist über eine Lagerkonsole 26 mit einem Schwenkbolzen 28 an einem Bodenblech 30 des Radlagers schwenkbar gelagert. Das Bodenblech 30 hat einen Anschlag 32 für das Bremspedal 20, das über die Betätigungsstange 22 und die Rückstellfeder 24 vorgespannt ist. Weitere Details der erfindungsgemäßen Inchbremsventilanordnung 2 werden im folgenden anhand der vergrößerten Darstellung gemäß Fig. 2 erläutert.

Das Ventilgehäuse 10 hat eine Ventilbohrung 36 mit axial beabstandeten Ringnuten 38, 40, 42, 44 und 46, über die der Tankanschluß T, der Arbeitsanschluß R, der Pumpenanschluß P, der Arbeitsanschluß B und der weitere Tankanschluß T ausgebildet sind.

Über eine Ringnut 48 läßt sich Lecköl zum Tank ableiten.

Im Bereich der beiden Ringnuten 38, 40 (Tankanschluß T, Arbeitsanschluß R) ist die Führungsbuchse 16 in der Ventilbohrung 36 befestigt. Die Führungsbuchse 16 hat eine Mittelbohrung, die sich nach unten (Ansicht nach Fig. 2) hin zu einer Führungsbohrung 50 für den Inchkolben 14 erweitert. Dieser hat einen Steuerbund 52, der gegenüber dem Grundkörper des Inchkolbens 14 radial erweitert sind. An dem in Fig. 2 oberen Endabschnitt des Inchkolbens 14 ist ein Radialbund ausgebildet, der den Durchmesser der Inchkolbenrückseite vorgibt. Die Inchkolbenrückseite (oben in Fig. 2) ist mit der Ringnut 40 (Anschluß R) über eine Schrägbohrung 58 verbunden. In der gezeigten Grundstellung liegt der obere Endabschnitt des Inchkolbens 14 an der Radialschulter der Führungsbohrung 50 an.

An dem in Fig. 2 unteren Steuerbund 52 sind am Umfang verteilte Steuerkerben 60 ausgebildet, über die bei Axialverschiebung des Inchkolbens 14 der Arbeitsanschluß R mit dem Tankanschluß T verbindbar ist.

An dem sich an den Steuerbund 52 anschließenden Endabschnitt des Inchkolbens 14 ist ein Federteller 62 befestigt, an dem eine Inchdruckfeder 64 angreift, die ihrerseits an der Innenstirnfläche einer Verschlußschraube 66 abgestützt ist. Diese verschließt die Ventilbohrung 36 des Ventilgehäuses 10.

Die Führungsbuchse 16 hat im Bereich der Ringnut 40 einen Radialbohrungsstern, so daß der Druck am Arbeitsanschluß R stirnseitig auf den Steuerbund 52 wirkt.

Bei dem in Fig. 2 dargestellten Ausführungsbeispiel hat die Stifteinrichtung zwei koaxial hintereinander liegende Stifte 68, 70, von denen der erstgenannte im radial verengten Teil der Führungsbohrung 50 der Führungsbuchse 16 geführt ist, während der zweite Stift 70 in einer Mittelbohrung 72 des Bremskolbens 12 gleitend geführt ist.

In der dargestellten Grundposition steht der zweite Stift 70 aus dem oberen Endabschnitt des Bremskolbens 12 hervor und trägt einen Inchfederteller 74, an dem eine Inchfeder 76 abgestützt ist. Diese greift an einem Stützkörper 78 der Betätigungseinrichtung 4 an, der über eine Anschlagschraube 80 mit der Betätigungsstange 22 verbunden ist. Der Stützköper 78 ist axial verschiebbar in einer Lagerbuchse 82 geführt, über die das Ventilgehäuse 10 nach oben (Ansicht nach Fig. 2) hin verschlossen ist. Beim gezeigten Ausführungbeispiel ist die Lagerbuchse 82 in einen radial erweiterten Aufnahmeabschnitt 84 der Ventilbohrung 36 eingeschraubt. An der Innenumfangswandung der Lagerbuchse 82 ist eine Umfangsnut zur Aufnahme eines Stützringes 85 ausgebildet, an dem eine Rückstellfeder 87 abgestützt ist, die den Stützkörper 78 in seine Grundposition gegen die innere Ringstirnfläche des Aufnahmeabschnittes 84 vorspannt.

Der Axialabstand zwischen dem Kopf der Anschlagschraube 80 und einem Bund des Inchfedertellers 74 ist so gewählt, daß diese beiden Bauelemente nach einem vorbestimmten Hub der Betätigungsstange und damit des Stützkörpers 78 in Anlage aneinander kommen, so daß eine weitere Bewegung der Betätigungsstange zum Inchfederteller 74 hin unmöglich ist. Auf diese Weise wird die Inchfeder 76 vor einer Beschädigung durch übermäßiges Zusammendrücken geschützt.

Die Inchfeder 76 ist vorgespannt, um den Tothub möglichst klein zu halten.

Die in Fig. 2 obere Stirnfläche der Führungsbuchse 16 endet etwa im Bereich der Ringnut 48, so daß der vom Inchkolben 14 entfernte Endabschnitt des ersten Stiftes 68 aus dieser Stirnseite in diese Ringnut 48 hineinragt. An diese Endabschnitt der Führungsbuchse 16 ist eine Rückstellfeder 86 abgestützt, die den Bremskolben 12 in seine dargestellte Grundposition vorspannt. In dieser ragt der obere Endabschnitt des Bremskolbens 12 in den Aufnahmeabschnitt 84 hinein. In diesem Bereich ist am Bremskolben 12 eine Anlageschulter für einen Federteller 88 ausgebildet, der durch die Vorspannung des Bremskolbens 12 gegen die untere Ringstirnfläche des Stützkörpers 78 vorgespannt ist und somit in Axialrichtung nur zur Stirnfläche des Aufnahmeabschnitts 84 hin bewegbar ist. An diesem Federteller 88 liegt eine Bremsfeder 90 auf, deren Federrate wesentlich größer ist als diejenige der Inchfeder 76. Der vom Federteller 88 entfernte Endabschnitt dieser Bremsfeder 90 endet im Axialabstand zu einer Anschlagfläche 92 des Stützkörpers 78, so daß die Bremsfeder 90 erst nach einem vorbestimmten Hub des Stützkörpers 78 wirksam wird.

Der Bremskolben 12 hat an seinem zur Führungsbuchse 16 benachbarten Endabschnitt eine Ausdrehung 94, an deren innerer Grundfläche die Rückstellfeder 86 abgestützt ist. In seiner dargestellten Grundposition befindet sich die Ringstirnfläche des Bremskolbens 12 etwa im Bereich der Ringnut 48 und die beiden Stifte 68, 70 liegen etwa im Bereich dieser Ringnut 48 und der Ausdrehung 94 aneinander an.

Von der inneren Grundfläche der Ausdrehung 94 weg erstreckt sich zunächst außermittig in Axialrichtung eine Druckmeßbohrung 96 für den Bremsdruck, deren radialer Endabschnitt in der Ringnut 44 mündet, in der der Arbeitsanschluß B ausgebildet ist. Auf diese Weise wird der Druck am Arbeitsanschluß B über die Druckmeßbohrung 96 an die untere Stirnfläche geführt.

Etwa im Mittelabschnitt des Bremskolbens 12 ist eine Steuernut 98 ausgebildet, deren Breite derart gewählt ist, daß die beiden Ringnuten 46, 44 in der dargestellten Grundstellung über die Steuernut 98 miteinander verbunden sind.

Durch die Steuernut 98 wird eine Steuerkante 100 definiert, über die durch eine Axialbewegung des Bremskolbens 12 die Verbindung zwischen den beiden Ringnuten 46 und 44 und damit die Verbindung vom Arbeitsanschluß B zum Tankanschluß T zu- bzw. aufsteuerbar ist. Die Steuerkante 100 hat geeignete Feinsteuerkerben oder -flächen, um eine Feinsteuerung zu ermöglichen.

In der Grundposition gesehen, etwa im Bereich der Ringnut 44 sind am Außenumfang des Bremskolbens 12 des weiteren Steuerkerben 102 vorgesehen, durch die eine Steuerkante 104 zum auf- bzw. zusteuern der Verbindung zwischen den Ringnuten 44 und 42 (Arbeitsanschluß B, Pumpenanschluß P) ausgebildet wird. In der dargestellten Grundposition ist die Verbindung von B nach P abgesperrt.

Beim vorbeschriebenen Ausführungsbeispiel werden zwei Stifte 68, 70 gewählt, um einen Mittenversatz zwischen der Mittelbohrung 72 des Bremskolbens 12 und der Führungsbohrung 50 der Buchse 16 auszugleichen. Dabei ist Voraussetzung, daß der zweite Stift 70 bei seinem Endhub nach unten nicht in die Führungsbohrung 50 der Führungsbuchse 16 eintaucht. Selbstverständlich könnte auch ein durchgehender Stift verwendet werden.

In der dargestellten Grundposition, das heißt bei unbetätigtem Bremspedal 20 wird der Bremskolben 12 durch die Rückstellfeder 86 in seine Grundposition vorgespannt, in der der Federteller 88 an der Lagerbuchse 82 anliegt. In dieser Grundposition des Bremskolbens 12 ist der Arbeitsanschluß B mit dem Tankanschluß T verbunden und die Verbindung von B nach P abgesperrt. An der unteren Stirnfläche des Bremskolbens 12 liegt der Druck am Arbeitsanschluß B (Bremsdruck) an.

Die Verbindung zwischen dem Tankanschluß T und dem Arbeitsanschluß R (Inchanschluß) ist - eine Leckage ausgenommen - durch den Steuerbund 52 abgesperrt.

Bei unbetätigtem Bremspedal wird über die Schrägbohrung 58 der Inchdruck pI an die Rückseite des Inchkolbens 14 geführt. Dieser Druck an der Rückseite des Inchkolbens 14 (Meßdruck) wirkt auch auf die benachbarte Stirnseite des Stiftes 68. Die Vorspannung der Inchdruckfeder 64 ist so gewählt, daß die Federkraft etwa gleich der Druckkraft an der Rückseite des Inchkolbens 14 ist. Über die Stifte 68, 70 wird in dieser Grundposition praktisch keine Kraft auf den Inchkolben 14 übertragen.

Bei Betätigung des Bremspedals, d.h. bei einer Verschwenkung um den Schwenkbolzen 28 wird der Stützkörper 78 zur Stirnseite des Aufnahmeabschnitts 84 hin bewegt, so daß die vorgespannte Inchfeder 76 zusammengedrückt wird. Die Kraft der Inchfeder 76 wird über den Federteller 74 auf die Stifte 68, 70 übertragen, so daß demzufolge auf den Inchkolben 14 die Kraft der Inchdruckfeder 64 der Inchdruck pI an der Rückseite des Inchkolbens 14 und die Kraft der Inchfeder 76 auf den Inchkolben 14 wirken. D.h. die Auslenkung des Inchkolbens 14 ist im wesentlichen durch das Kräftegleichgewicht zwischen den von der Inchdruckfeder 64, der Inchfeder 76 und der resultierenden Kraft aus dem Inchdruck pI bestimmt. Dabei wird der Druck am Tankanschluß 38 vernachlässigt. In Abhängigkeit von den wirkenden Kräften wird der Inchkolben 14 aus seiner Grundstellung gegen die Kraft der Inchdruckfeder 64 herausbewegt und nach einem vorbestimmten Hub die Verbindung zwischen dem Inchanschluß R und dem Tankanschluß T über die Steuerkerben 60 des Inchkolbens 14 aufgesteuert. Der Inchdruck wird zum Tank hin abgebaut, so daß der Meßdruck an der Inchkolbenrückseite absinkt und sich in Abhängigkeit von der Bremspedalstellung ein Kräftegleichgewicht einstellen kann. Der Inchkolben 14 befindet sich entsprechend in seiner Regelposition, wobei der Inchdruck pI mit zunehmender Druckkraft der Inchfeder 76 abnimmt.

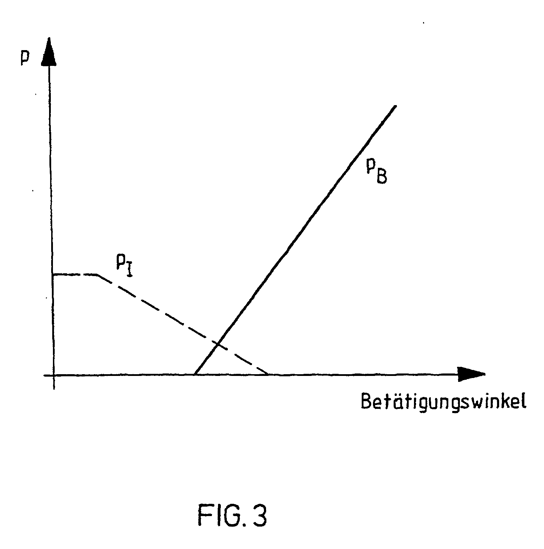

Der entsprechende Kennlinienverlauf für den Inchdruck p_{I} ist in Fig. 3 gestrichelt dargestellt. Demgemäß ändert sich der Inchdruck während der anfänglichen Verschwenkung des Bremspedales 20 aufgrund der Vorspannung der Inchfeder 76 nicht und sinkt dann von seinem Maximalwert stetig in Abhängigkeit vom Betätigungswinkel des Bremspedals 20 auf Null ab.

Bei einem vorbestimmten Betätigungswinkel des Bremspedals 20, der einem Hub H der Betätigungsstange 22 und damit des Stützkörpers 78 entspricht, gelangt die Anlageschulter 92 in Anlage an die Bremsfeder 90, so daß nach diesem Hub H der Bremskolben 12 gegen die Kraft der Rückstellfeder 86 mit einer Federkraft beaufschlagt wird. Aufgrund der erheblich größeren Federrate der Bremsfeder 90 wird eine Axialverschiebung des Bremskolbens 12 bewirkt. Das heißt, durch die Wahl des Leerhubes H und geeignete Abstimmung der Federraten der Bremsfeder 90 und der Regelfeder 94 kann exakt derjenige Betätigungswinkel des Bremspedals 20 festgelegt werden, bei dem der Bremskolben 12 erstmals eine Steuerbewegung durchführt, so daß die Axialverschiebung des Bremskolbens 12 und des Inchkolbens 14 nahezu unabhängig voneinander steuerbar sind.

Durch die Axialverschiebung des Bremskolbens 12 wird über die Steuerkante 100 die Verbindung vom Tankanschluß T zum Bremsabschluß B zugesteuert, während durch die Steuerkante 104 die Verbindung vom Pumpenanschluß P zum Bremsanschluß B aufgesteuert wird, so daß die Bremsanlage mit Hydraulikfluid versorgt wird. Der Bremsdruck PB am Bremsanschluß B wird über die Druckrückführbohrung 96 zur unteren Stirnfläche des Bremskolbens 12 geführt, so daß die Bremsfeder 90 gegen die Kraft der schwachen Regelfeder 94 und die aus dem Bremsdruck p_{B} resultierende Druckkraft wirkt. Der Bremskolben 12 hat nun seine Regelposition erreicht, in der die Regelstellung vom Kraftgleichgewicht zwischen der Bremsfeder 90 einerseits und der Druckkraft p_{B} und der Kraft der Regelfeder 94 andererseits abhängt. Mit steigender Kraft der Bremsfeder 90 (abhängig vom Betätigungswinkel des Bremspedals) wird der Bremskolben 12 stärker ausgelenkt, so daß die Verbindung vom Pumpenanschluß P zum Tankanschluß B weiter aufgesteuert und die Verbindung zum Tankanschluß T immer mehr zugesteuert wird. Der Bremsdruck p_{B} steigt somit stetig in Abhängigkeit vom Betätigungswinkel von Null bis zu seinem Maximalwert an.

Wie bereits vorstehend erwähnt wurde, kann durch entsprechende Wahl der Axiallänge der Stifte 68, 70 und des Hubes H und entsprechende Abstimmung der Federn erreicht werden, daß das Ansteigen des Bremsdruckes p_{B} bereits vor dem Absinken des Inchdruckes p_{I} auf Null beginnt, so daß sich die beiden Kennlinien kreuzen. Eine derartige Kennlinienpaarung war beim vorbeschriebenen Stand der Technik nicht möglich, da sich bei den bekannten Konstruktionen der Bremsdruck entweder von Beginn an oder nach Beenden des Inchvorganges aufbaute. Die erfindungsgemäße Konstruktion eröffnet einen großen Gestaltungsspielraum, da sich mit dieser Konstruktion sowohl die Kennlinienverläufe des Standes der Technik als auch die sich überlappenden Kennlinien gemäß Fig. 3 mit nahezu beliebigen Überlappungsbereichen realisieren lassen.

Offenbart ist eine Inchbremseinrichtung bei der ein Bremskolben einer Bremsventilanordnung über eine Stelleinrichtung erst nach einem vorbestimmten Hub eines Mitnehmers für einen Inchkolben eine Stellbewegung des Bremskolbens einleitet.

## Patentansprüche

1. Inchbremseinrichtung mit einer Inch- und einer Bremsventilanordnung (6, 8), über die bei Betätigung einer Betätigungseinrichtung (20, 22) eine Antriebseinrichtung bzw. eine Bremseinrichtung eines Arbeitsgerätes ansteuerbar sind, wobei die Kolben (12, 14) der Inch- und der Bremsventilanordnung (6, 8) über eine Übertragungseinrichtung mit der Betätigungseinrichtung (20, 22) in Wirkverbindung stehen, wobei die Übertragungseinrichtung einen Mitnehmer (68, 70) für den Inchkolben (14) und eine Stelleinrichtung (90, 92) für den Bremskolben (12) hat, **dadurch gekennzeichnet, daß** die Stelleinrichtung (90, 92) für den Bremskolben (12) nach einem vorbestimmten Weg des Mitnehmers (68, 70) und/oder der Betätigungseinrichtung (20, 22) eine Stellbewegung des Bremskolbens (12) einleitet.

2. Inchbremseinrichtung nach Patentanspruch 1, **dadurch gekennzeichnet, daß** der Mitnehmer eine Stifteinrichtung (68, 70) ist, die einerseits von der Betätigungseinrichtung (20, 22) mit Kraft beaufschlagbar ist und andererseits an dem Inchkolben (14) anliegt.

3. Inchbremseinrichtung nach Patentanspruch 2, **dadurch gekennzeichnet, daß** die Kolben (12, 14) hintereinander liegend in einem Ventilgehäuse (10) aufgenommen sind und die Stifteinrichtung (68, 70) den Bremskolben (12) gleitend durchsetzt.

4. Inchbremseinrichtung nach Patentanspruch 2 oder 3, **dadurch gekennzeichnet, daß** die Betätigungseinrichtung eine Betätigungsstange (22) hat, die über eine an einem Inchfederteller (74) angreifende Inchfeder (76) vorgespannt ist und das die Stifteinrichtung (68, 70) an dem Inchfederteller (74) anliegt.

5. Inchbremseinrichtung nach Patentanspruch 3 oder 4, **dadurch gekennzeichnet, daß** die Stifteinrichtung (2) koaxial hintereinander liegende Stifte (68, 70) hat, die im Bremskolben (12) bzw. in einer Führungsbuchse (16) für den Inchkolben (14) geführt sind.

6. Inchbremseinrichtung nach einem der Patentansprüche 3 bis 5, **dadurch gekennzeichnet, daß** im Bremskolben (12) eine Druckrückführbohrung (96) ausgebildet ist.

7. Inchbremseinrichtung nach einem der Patentansprüche 2 bis 6, **dadurch gekennzeichnet, daß** der Inchkolben (14) über eine Inchdruckfeder (64) in seine Grundposition vorgespannt ist.

8. Inchbremseinrichtung nach einem der Patentansprüche 5 bis 7, **dadurch gekennzeichnet, daß** der Bremskolben (12) mittels einer an der Führungsbuchse (16) abgestützten Regelfeder (86) vorgespannt ist.

9. Inchbremseinrichtung nach einem der vorhergehenden Patentansprüche, **dadurch gekennzeichnet, daß** an einem Endabschnitt des Bremskolbens (12) ein Federteller (88) zum Abstützen einer Bremsfeder (90) ausgebildet ist, deren vom Federteller (88) entfernter Endabschnitt nach einem Hub (H) in Anlage an die Betätigungsstange (22) oder einem an dieser befestigten Stützkörper (78) mit einem Anschlag (92) bringbar ist.

10. Inchbremseinrichtung nach den Patentansprüchen 4 und 9, **dadurch gekennzeichnet, daß** die Betätigungsstange (22) oder der Stützkörper (78) einen Anschlag (80) haben, der in Anlage an den Inchfederteller (74) bringbar ist.

## Claims

1. Inching braking system including an inching valve assembly and a brake valve assembly (6, 8), whereby upon actuation of actuation means (20, 22) drive means or brake means, respectively, of a work tool may be controlled, wherein the pistons (12, 14) of said inching valve assembly and brake valve assembly (6, 8) are operatively connected with said actuation means (20, 22) by way of transfer means, wherein said transfer means have a driving member (68, 70) for said inching piston (14) and an actuator (90, 92) for said brake piston (12), **characterised in that** said actuator (90, 92) for said brake piston (12) will initiate an actuation movement of said brake piston (12) following a predetermined stroke of said driving member (68, 70) and/or of said actuation means 20, 22).

2. Inching braking system according to claim 1, **characterised in that** said driving member is a pin means (68, 70) which may receive the application of a force by said actuation means (20, 22) on the one hand and contacts said inching piston (14) on the other hand.

3. Inching braking system according to claim 2, **characterised in that** said pistons (12, 14) are accommodated in a valve housing (10) in successive arrangement, and that said pin means (68, 70) slidingly pass through said brake piston (12).

4. Inching braking system according to claim 2 or 3, **characterised in that** said actuation means include an actuation rod (22) which is biased through an inching spring (76) which acts on an inching spring plate (74), and **in that** said pin means (68, 70) contact said inching spring plate (74).

5. Inching braking system according to claim 3 or 4, **characterised in that** said pin means (2) comprise pins (68, 70) having a successive coaxial arrangement which are guided in said brake piston (12) or in a guide bush (16) for said inching piston (14), respectively.

6. Inching braking system according to any one of claims 3 to 5, **characterised in that** a pressure return bore (96) is formed in said brake piston (12).

7. Inching braking system according to any one of claims 2 to 6, **characterised in that** said inching piston (14) is biased into its basic position through an inching pressure spring (64).

8. Inching braking system according to any one of claims 5 to 7, **characterised in that** said brake piston (12) is biased through a control spring (86) which is supported against said guide bush (16).

9. Inching braking system according to any one of the preceding claims, **characterised in that** on one end portion of said brake piston (12) a spring plate (88) for supporting a brake spring (90) is formed, wherein the end portion of said brake spring which is removed from said spring plate (88) may, following a stroke (H), be taken into contact with said actuation rod (22) or a support member (78) fastened thereto and including a stop (92).

10. Inching braking system in accordance with claims 4 and 9, **characterised in that** said actuation rod (22) or said support member (78) have a stop (80) which may be taken into contact against said inching spring plate (74).

## Revendications

1. Dispositif de freinage graduel comportant un dispositif à soupape de freinage graduel et à soupape de freinage (6,8), au moyen duquel, lors de l'actionnement d'un dispositif d'actionnement (20,22), un dispositif d'entraînement et un dispositif de freinage d'un engin de travail peuvent être commandés, les pistons (12,14) du dispositif (6,8) à soupape de freinage graduel et à soupape de freinage étant reliés par l'intermédiaire d'un dispositif de transmission au dispositif d'actionnement (20,22), et le dispositif de transmission comportant un organe d'entraînement (68,70) pour le piston de freinage graduel (14) et un dispositif de réglage (90,92) pour le piston de freinage (12), **caractérisé en ce qu'**au bout d'un trajet prédéterminé de l'organe d'entraînement (68,70) et/ou du dispositif d'actionnement (20,22), le dispositif de réglage (90,92) pour le piston de freinage (12) déclenche un déplacement de réglage du piston de freinage (12).

2. Dispositif de freinage graduel selon la revendication 1, **caractérisé en ce que** l'organe d'entraînement est un dispositif à tiges (68,70), qui d'une part peut être chargé par une force appliquée par le dispositif d'actionnement (20,22) et d'autre part s'applique contre le piston de freinage graduel (14).

3. Dispositif de freinage graduel selon la revendication 2, **caractérisé en ce que** les pistons (13,14) sont logés l'un derrière l'autre dans un boîtier de soupape (10) et que le dispositif à tiges (68,70) traverse, en glissant, le piston de freinage (12).

4. Dispositif de freinage graduel selon la revendication 2 ou 3, **caractérisé en ce que** le dispositif d'actionnement possède une barre d'actionnement (22), qui est précontrainte par l'intermédiaire d'un ressort de freinage graduel (76), qui s'applique contre une coupelle de ressort de freinage graduel (74) et que le dispositif à tiges (68,70) s'applique contre la coupelle de ressort de freinage graduel (74).

5. Dispositif de freinage graduel selon la revendication 3 ou 4, **caractérisé en ce que** le dispositif à tiges (2) comporte des tiges (68,70), qui sont disposées coaxialement l'une dans l'autre et qui sont guidées dans le piston de freinage (12) ou dans une douille de guidage (16) pour le piston de freinage graduel (14).

6. Dispositif de freinage graduel selon l'une des revendications 3 à 5, **caractérisé en ce qu'**un perçage de renvoi de pression (96) est formé dans le piston de freinage (12).

7. Dispositif de freinage graduel selon l'une des revendications 2 à 6, **caractérisé en ce que** le piston de freinage graduel (14) est précontraint dans sa position de base par l'intermédiaire d'un ressort de pression de freinage graduel (64).

8. Dispositif de freinage graduel selon l'une des revendications 5 à 7, **caractérisé en ce que** le piston de freinage (12) est précontraint au moyen d'un ressort de régulation (86), qui prend appui sur la douille de guidage (16).

9. Dispositif de freinage graduel selon l'une des revendications précédentes, **caractérisé en ce que** sur une section d'extrémité du piston de freinage (12) est formée une coupelle (88) pour ressort, servant à supporter un ressort de freinage (90) et dont la section d'extrémité, qui est éloignée de la coupelle (88) de support pour ressort, peut être appliquée, au bout d'une course (H), contre la barre d'actionnement (22) ou contre un corps d'appui (78) fixé sur cette barre, au moyen d'une butée (92).

10. Dispositif de freinage graduel selon les revendications 4 et 9, **caractérisé en ce que** la barre d'actionnement (22) ou le corps d'appui (78) comportent une butée (80), qui peut être amenée à s'appliquer contre la coupelle (74) pour le ressort de freinage graduel.
